# EUROPEAN PATENT APPLICATION

(11) **EP 1 549 024 A1**
(43) Date of publication of application: **29.06.2005**
(21) Application number: 03425818.6
(22) Date of filing: 23.12.2003
(51) Int. Cl.: H04L 29/08

(54) **A method of processing presence information in a communication system with hererogeneous presence protocols, and communication system implementing the method**

(71) Applicant: Siemens Mobile Communications S.p.A., 20126 Milano (IT)
(72) Inventor: Blaiotta, Donatella, 27100 Pavia (IT); De Zen, Giovanna, 31011 Asolo (TV) (IT)

(57) **Abstract**

There is provided a method of processing presence information in a communication system (1) including a plurality of communication subsystems (2, 3, 4, 5) each supporting a presence service operating according to a respective local presence protocol, in order to obtain interoperability among the different subsystems. This is obtained by converting (22, 32, 42, 52) the presence messages generated at an originating subsystem from the local protocol to a common, interoperability protocol and, for messages including presence documents, by converting the data strings contained in the document from a local, protocol-specific format, to an interoperability format. Before being passed to a destination subsystem, the messages and the presence documents are converted (22b, 32, 42, 52) into the local presence protocol and format of that subsystem. The invention provides also a communication system (1) implementing the method.

## Description

### Field of the Invention

The present invention concerns communication systems supporting presence-based services, and more particularly it refers to a method of processing presence information in a communication system with heterogeneous presence protocols, and to a communication system implementing the method.

Preferably, but not exclusively, the invention is intended for processing presence information in mobile communication networks.

### Background of the invention

Presence service is a service available since some years for wireline Internet users, generally in connection with Instant Messaging service, to allow users of the Instant Messaging service to keep track of the online status or availability of their correspondents and to be informed of changes in such status/availability. Instant Messaging is a fast, interactive and mainly text based communication method in which the subscribers to the service who are active can immediately see the messages sent by their correspondents. In general, "presence information" communicated within a presence service contains various dynamic information items such as reachability, availability and location of the user for communication. Said information is generally included is a so-called "presence document". The combination of instant messaging and presence services is called an instant messaging and presence service (IM&P).

The essential features of an IM&P are disclosed in documents RFC 2778 "A Model for Presence and Instant Messaging" by M. Day et al., February 2000, and RFC 2779 "Instance Messaging/Presence Protocol Requirements" by M. Day et al., of the IETF (Internet Engineering Task Force). Said documents are available at IETF site http://www.ietf.org/rfc.html.

This kind of service is presently being proposed also for wireless networks.

Presence services for wireless networks provide the ability for a network to manage presence information of a user, of his device, services or service media even whilst roaming. User's presence information may be obtained through input from the user, information supplied by network entities or by elements external to the home network. Consumers of presence information, i.e. watchers, may be internal or external to the home network. Exploitation of this service will enable the creation of wireless-enhanced rich multimedia services along the lines of those currently present in the Internet world.

Specifications for a mobile IM&P have been established for instance by Open Mobile Alliance (OMA) through the Wireless Village (WV) initiative and the WV specification v 1.2 has been published within IMPS (Instant Messaging and Presence Service) working group "OMA-IMPS-V1_2_Candidate_Package-V1; Definition for IMPS v1.2; Draft Version 2003-01-171.

Besides OMA, also other standardisation bodies have developed, or are developing, presence services related specifications/recommendations utilisable in wireless environment. We may mention here:
- IETF (Internet Engineering Task Force) with SIMPLE (SIP for Instant Messaging and Presence Leveraging Extensions) and XMPP (Extensible Messaging and Presence Protocol). The present status of the work in progress on said items is disclosed in a number of Internet Drafts. For SIMPLE, see e.g. the following ones: draft-ietf-impp-cpim-03 "Common Presence and Instant Messaging (CPIM)"; draft-ietf-impp-pres-02 "Common Profile for Presence (CPP)"; draft-ietf-impp-pidf-07 "Common Presence and Instant Messaging (CPIM) Presence Information Data Format"; draft-ietf-cpim-mapping-01 "CPIM Mapping of SIMPLE Presence and Instant Messaging"; draft-ietf-simple-data-req-02 "Requirements for Manipulation of Data Elements in Session Initiation Protocol (SIP) for Instant Messaging and Presence Leveraging Extensions (SIMPLE) Systems"; draft-ietf-simple-event-list-01 "A Session Initiation Protocol (SIP) Event Notification Extension for Collections"; draft-ietf-simple-presence-10 "A Presence Event Package for Session Initiation Protocol (SIP)"; draft-ietf-simple-winfo-package-05 "A Watcher Information Event Template-Package for the Session Initiation Protocol (SIP)"; draft-ietf-presence-winfo-format-04 "An Extensible Markup Language (XML) Based Format for Watcher Information". For XMPP, see e.g. Internet Drafts draft-ietf-xmpp-core-07 "XMPP Core" and draft-ietf-xmpp-im-07 "XMPP Instant Messaging". IETF Internet Drafts are available at site http://www.ietf.org/internet-drafts;
- PAM (Presence and Availability Management) Forum (see European Standard ES 202915-14)
- 3GPP (3rd Generation Project Partnership) with Presence Services in IMS [IP (Internet Protocol) Multimedia Subsystem] Architecture (see Technical Specifications TS 22.141 and TS 23.141 and Technical Report TR 24.841).

It is not necessary to go in deeper details about the different protocols proposed or being studied, since they are well known to those skilled in the art.

Given the availability of different solutions for presence services, the existence of interoperability problems is immediately apparent. On the one side, a widely agreed solution for mobile market is still missing (in spite of the WV initiative), and it is not acceptable that subscribers of two local mobile operators cannot see their respective presence information and exchange instant messages. On the other side, mobile operators expect to be able to allow the interactions between mobile and Internet users and between mobile and corporate users for any presence enabled services starting from Instant Messaging.

The problem of ensuring interoperability between different platforms has not yet found a global solution.

WO-A 01/56308 discloses an instant messaging service utilisable both in wireline and in wireless networks.

3GPP Technical Specification TS 22.141 identifies the requirements for supporting the service in an interoperable manner both within the wireless network and with external networks, but does not teach how interoperability between different systems can actually be obtained.

Some systems (e.g. Wireless Village or XMPP) propose a protocol-specific gateway that allows the interconnection to foreign systems (e.g. XMPP -> SIMPLE, XMPP -> PAM). Yet the gateway features and behaviour are not disclosed. Therefore the technician has no indication on how to map the procedures and the presence document formats envisaged by the different protocols into a corresponding procedure and document format in the other protocol. In any case, even if the gateways were defined, using protocol-specific gateways would be an expensive solution, in that each provider of the presence service would be compelled to have gateways for all other protocols. Moreover, in case of mobile communication networks, an operator, in order to provide protocol-specific gateways, needs to know all characteristics of the presence services managed by other operators: this is a serious hindrance to the development of the gateways, since generally the operators do not like to disclose such kind of information to the concurrence.

PAM proposes a software system managing a plurality of domains with different administrative entities, by operating at the application level, i.e. at higher level than the protocol level. In such situation, firewalls between the different domains are indispensable for security reasons, and such firewall prevent the managing system for operating correctly.

A solution for the problem of the interoperability between heterogeneous presence services is disclosed in the document "Proposal for Common Interoperability Protocol", presented by F. Bossoli et al. at the OMA IMPS Working Group meeting held in Berlin on 9 September 2003 and available at site http://www.openmobilealliance.org/ ftp/IMPS/ID/03/ OMA-IMPS-2003-0175R01, and in our co-pending European Patent application No. EP 03425563.8. According to such a solution, presence information from a client of an originating subsystem is converted from the local protocol of that subsystem into an interoperability protocol, in particular the SIMPLE (SIP for Instant Messaging and Presence Leveraging Extensions] protocol, and the presence information to be passed to a client of the service supported by a destination subsystem are converted from the interoperability protocol to the local protocol of the destination subsystem.

Use of a common protocol for interoperability solves the problems mentioned above and allows also accommodating newly deployed systems.

The present invention goes one step further, and extends interoperability among the different services down to the document level, that is to the level of the format and language in which the presence document is drafted and included in the protocol messages.

Use of a common protocol and a common format and language for the presence documents allows an actual and complete interoperability of heterogeneous presence services.

### Summary of the invention

In a first aspect of the invention, there is provided a method of processing presence information in a communication system in which an interoperability protocol is used for the exchange of messages related to the presence service among subsystems using heterogeneous presence protocols, and in which presence documents containing said presence information are drafted by each subsystem in a respective protocol-specific format. The method is characterised in that it comprises the steps of:
- converting a presence document produced by an entity of said originating subsystem from the format specific for the local protocol of the originating subsystem into an interoperability format supported by said interoperability protocol, thereby building an interoperability presence document;
- including said interoperability presence document into a predetermined information field of a message organised according to said interoperability protocol, to be forwarded over a signalling network supporting said interoperability protocol; and
- extracting an interoperability presence document to be passed to an entity in the destination subsystem from said message field, and converting the message from said interoperability format into the format required by said destination subsystem.

In a second aspect of the invention, there is provided a communication system wherein the presence service managing means in each subsystem are connected to conversion means for converting messages generated in the subsystem from the local protocol to an interoperability protocol, and for converting messages intended for that subsystem from said interoperability protocol to the local protocol. The system is characterised in that said conversion means are further arranged to convert a presence document produced by an originating entity from the format specific for the local protocol of the originating subsystem into a presence document drafted in an interoperability format supported by said interoperability protocol, thereby building an interoperability presence document; to include said interoperability presence document into a predetermined information field of a message organised according to said interoperability protocol, to be forwarded over a signalling network connecting the protocol conversion means in the different subsystems and supporting said interoperability protocol; and to extract an interoperability presence document to be passed to said destination entity from said message field and to convert said document into the format required by the local protocol of said destination subsystem.

Preferably, the interoperability format is an XML-based format. This choice is dictated by the fact that most of the presence documents formats proposed for wireless applications are already XML-based formats. in particular, the interoperability format is an extension of the CPIM/PIDF (Presence Information Data Format) and RPIDF (rich PIDF) formats defined by IETF for SIMPLE. Thus, the best consistency with the interoperability protocol is attained.

### Brief description of the drawings

The invention will be better understood from the following description of a preferred embodiment, given by way of non-limiting example, with reference to the accompanying drawings, in which:
- Fig. 1 is a schematic block diagram of a communication system embodying the invention;
- Fig. 2 is a schematic representation of an interoperability gateway;
- Fig. 3 is a more detailed block diagram of part of the system of Fig. 1;
- Figs. 4A to 4C are examples of mappings of information items of a presence documents; and
- Figs. 5 and 6 are graphical representations of the XML Schema allowing the creation of the interoperability presence document provided by the invention.

### Description of the preferred embodiment

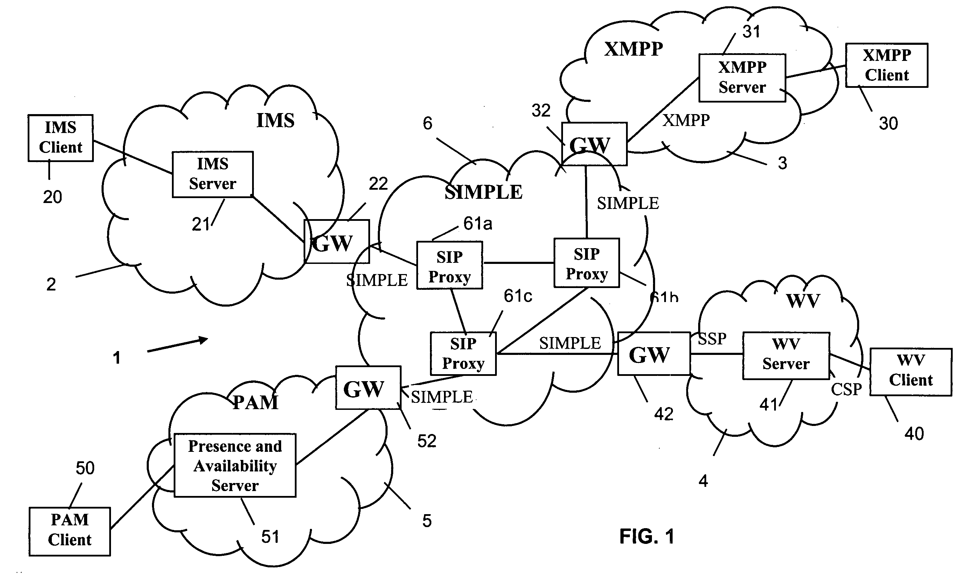

Referring to Fig. 1, a communication system 1 according to the invention is made up of a plurality of communication subsystems (or domains) 2, 3, 4, 5 offering their clients a presence service based on a respective local presence protocol, different from the protocols) used by one or more (or even all) of the other subsystems. In the preferred application of the invention subsystems 2 - 5 are mobile communication networks of different operators. References 20, 30, 40, 50 indicate clients of the presence services in subsystems 2 - 5.

The drawing shows subsystems 2 - 5 supporting presence services based on IMS, XMPP, Wireless Village (WV) and PAM Forum architectures, respectively. Preferably, the local presence protocols in those subsystems are protocols providing for a local interoperability. PAM and XMPP are already defined as interoperability protocols. As to IMS and WV subsystems, it is assumed that IMS subsystem 2 (as well as any other subsystem using a SIP-based architecture) uses the SIMPLE protocol and that WV subsystem 4 uses the SSP protocol. The units managing the presence service are not shown in detail and are schematically indicated by 21, 31, 41 and 51, respectively, genrally denoted Servers.

Further details on how the individual presence services are actually implemented are not necessary for the understanding of the present invention, which does not affect the individual services.

Interoperability between the different presence services is obtained through the usage of the SIMPLE protocol as a common (or interoperability) protocol supporting both the basic procedures (publishing, subscription/unsubscription, notification) and a number of other procedures, such as asking for watcher information, asking for watcher authorisation and updating of presence information. The reasons for the choice of said protocol are set forth in the document "Proposal for Common Interoperability Protocol" and in the patent application mentioned above.

In order to map or convert the procedures of the local presence protocols into the common protocol and vice-versa, interoperability gateways 22 - 52 connected to subsystems 2 - 5 are provided. The use of a common protocol implies the provision of a corresponding signalling network 6 - in the present case a SIP-SIMPLE signalling network - supporting it and connecting the various gateways. The structure of a SIP network needs not to be disclosed in detail, and is here schematically shown by a number of SIP proxies 61 a, 61 b, 61 c... connected to each other and to gateways 22 - 52.

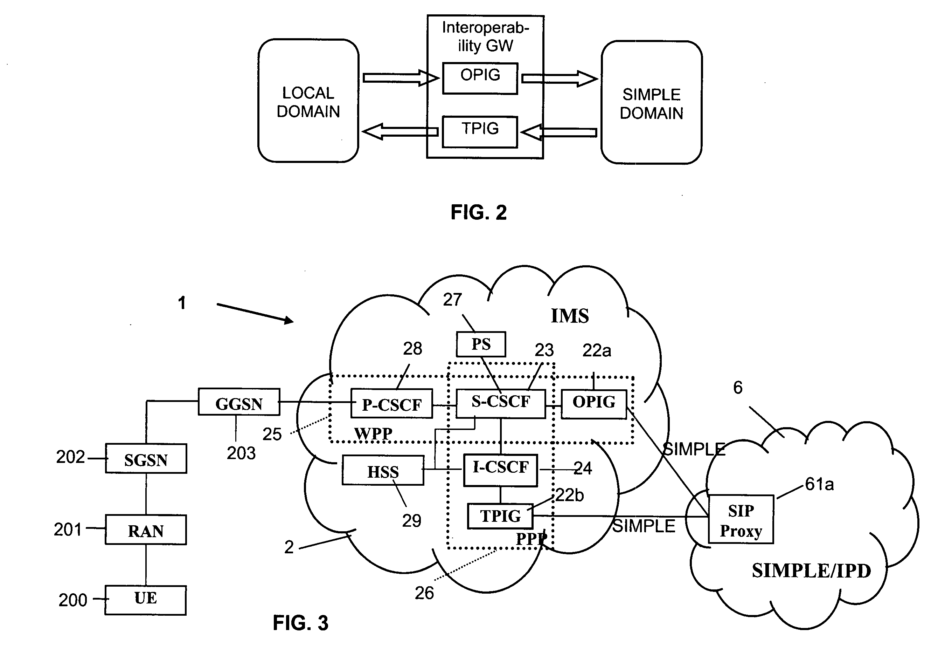

As shown in Fig. 2, each interoperability gateway comprises two gateway elements: the element that maps the local domain presence procedures into SIMPLE based interoperability procedures is denoted OPIG (Originating Presence Interoperability Gateway), and the element that maps SIMPLE based interoperability procedures into local presence procedures is denoted TPIG (Terminating Presence Interoperability Gateway).

The two gateway elements are separately shown in Fig. 3 for subsystem 2 (blocks 22a, 22b). The drawing shows also in more details, for the same subsystem 2, the units managing the presence service and their connection to the elements of a mobile communication network.

Such units include Presence Server (PS) 27 and the units intended with managing the Call Session Control Functions (CSCF), namely the Proxy-CSCF (P-CSCF, block 28), the serving CSCF (S-CSCF, block 23), and the Interrogating CSFC (I-CSCF, block 24). Also shown is the Home Subscriber Server (HSS) 29, i.e. the data base containing the data relevant to the presence service users in subsystem 2 (e.g. user's profile, subscribed services, information on whether the user is registered, etc.). User equipment (UE) 200 is the client, which accesses P-CSCF 28 through the radio access network (RAN) 201, the Service GPRS Supporting Node (SGSN) 202 and the Gateway GPRS Supporting Node (GGSN) 203.

The functions of said units are defined in the 3GPP specifications mentioned above.

Dotted-line blocks 25, 26 labelled WPP and PPP, respectively, indicate that units 23, 24 and 28 are part of the so-called Watcher Presence Proxy and Presentity Presence Proxy. The location of blocks 22a and 22b in WPP and PPP, respectively, corresponds to assuming that client 200 is a watcher subscribing to presence information of a presentity, possibly connected to one of the other subsystems: the messages originated by watcher 200 are thus to be handled by OPIG 22a, whereas TPIG 22b has to handle requests by external watchers for presence information of a presentity in IMS.

It is also to be appreciated that the connection of the mobile network elements shown in the Figure, which does not involve directly the presence server, is specific for IMS domain and will generally be different in other domains. For instance, if the presence service is based on the WV architecture, the GGSN will be connected to the presence server.

Procedure mapping is not sufficient to attain a full interoperability among the different subsystems. Indeed, it is to be taken into account that some procedures - in particular the notification, the publication and possibly the subscription (when a user wishes to subscribe only a subset of all information available) - entail the transmission of the presence document containing the actual presence information or "attributes" characterising the user. The term "presence information", as used herein, refers therefore to information generated by both a presentity and a watcher. Now, it is to be considered that:
- presence documents generated in different domains use different formats, even if generally they are transmitted as text documents: in particular, XML (Extensible Markup Language) based format are used by XMPP, WV (DTD = Document Type Definition) and 3GPP/IETF (PIDF); IDL (Interface Definition Language) based Attribute - Value pairs are used by PAM;
- some presence attributes are defined in more domains ("common" attributes) but they are identified through different attribute names or tags in the message (e.g. location, network status, ...) and might have different attribute values;
- some presence attributes are specific for one domain, e.g. TimeZone of WV.

According to the invention, the same approach as at the protocol level is followed also at the presence document level: a common (interoperability) format is defined, which is supported by the interoperability protocol and can be understood by all domains, and the presence documents drafted by an originating subsystem in its local, protocol-specific format are converted into the interoperability format. Conversely, the presence documents drafted in the interoperability format and to be passed to a destination subsystem are converted from the interoperability format to the local, protocol-specific format. The OPIG and TPIG units in gateways 22 - 52 are respectively used also for performing the translation from the local format into the interoperability format and vice versa. The presence document drafted in the interoperability format will be referred to as Interoperability Presence Document (IPD).

Taking into account that the majority of the formats defined for the wireless world by the different standardisation bodies are XML-based formats, the common format chosen according to the invention is also an XML based format. More particularly, the common format is based upon the Common Presence and Instant Messaging Presence Information Data Format (CPIM/PIDF) defined for SIMPLE. The IPD drafted in such a format will be an extension of the RPIDF (Rich PIDF), which has been proposed by SIMPLE Working Group within IETF and is in turn an extension or enrichment of PIDF. The RPIDF is disclosed for instance in Internet Draft draft-ietf-simple-rpid-00 "RPID - Rich Presence Information Data Format", by R. Schulzrinne (ed.) et al., available at the same site as the above mentioned Internet Drafts. This choice offers the best consistency with the choice of SIMPLE as the common protocol.

As known to the skilled in the art, extending an XML-based format entails defining a new namespace for all extension elements, and a new tag for each extension element. The new namespace, referred to hereinafter as "interoperability namespace", is identified in the document by prefix "xmlns:int" and defines the new tags on the basis of the following rules:
- for each common attribute which cannot be mapped to an already existing tag of IETF CPIM PIDF (i.e. for attributes which are present in at least two different solutions but are identified through different tags), a new XML tag and its type are defined taking into account all possible mapping requirements from existing solutions;
- for each attribute which is domain specific and which cannot be mapped to an already existing tag of RPIDF, a new XML tag is defined as in its native domain.

Consequently, for mapping the local presence document into the IPD at an OPIG like OPIG 22a, the following rules apply:
1) if the local attribute can be mapped with the same meaning to a CPIM/PIDF defined attribute, existing CPIM/PIDF namespace tags are used;
2) if the local attribute can be mapped with the same meaning to an RPIDF defined attribute, existing RPIDF namespace tags are used;
3) if neither preceding rule applies, the tags defined in the interoperability namespace are used.

In order to allow some form of optimisation, the translation function of the OPIG could evaluate which specific mappings are required and which can be skipped, taking into account the type of remote protocol and format. For instance, the OPIG could even dispense with mapping information items that are not understood within the watcher domain. The remote format can be determined by analysing the domain part of the resolved "destination" address (i.e. the SIMPLE method Request-URI) and by extracting the related format type from a configuration table using the domain value as key. Such configuration table is stored in all gateways applying optimisation functions.

However, in what is at present considered the best mode of carrying out the invention, said optimisation is not performed, and the originating domain does not have any knowledge about the destination domain. Thus the gateways are dummier and therefore cheaper.

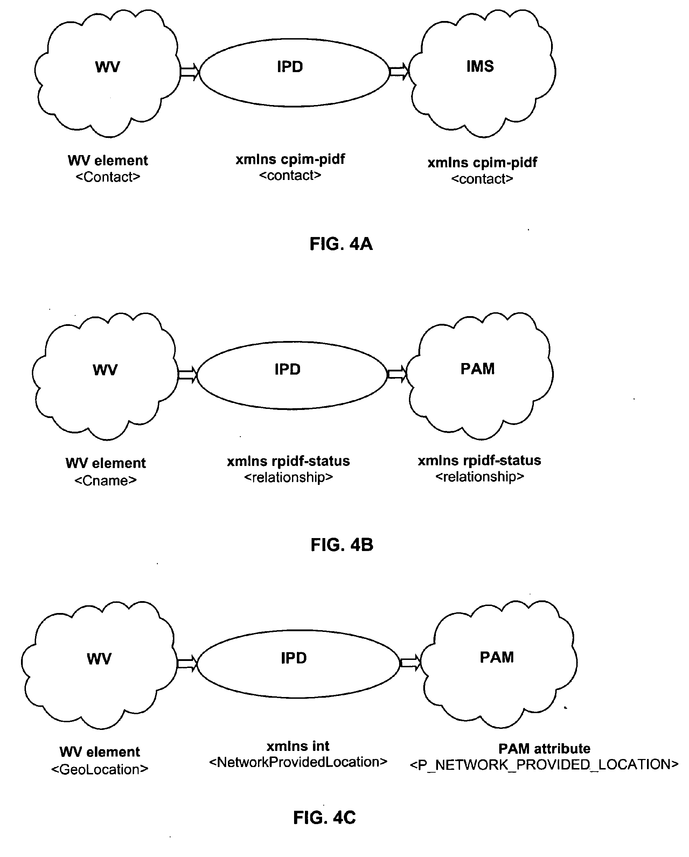

Figs. 4A to 4C graphically show some mapping examples. More particularly:
- Fig. 4A shows the mapping from WV to IMS for the "Contact" presence information element, which is part of the "preferred contact" attribute: this is a situation in which rule 1) applies, since an attribute with the same meaning ("contact") is defined in CPIM/PIDF;
- Fig. 4B shows the mapping between WV and PAM for the "relationship with a ?" (or Cname) presence information element, where rule 2 applies since the corresponding attribute <relationship> has been defined in RPIDF; and
- Fig. 4C shows the mapping between WV and PAM for the "geographical location" presence information element, where rule 3 applies since no mapping is possible with either CPIM/PIDF or RPIDF tags.

The mapping of the attributes presently defined in domains 2 - 5 of Fig. 1 to the common format is shown in annexed tables 1 to 3 (Annex I), which correspond to the application of rules 1) to 3), respectively. In practice, each gateway 22 - 52 will store a look-up table comprising the column of tables 1 to 3 specific for the local format and that related to the common format.

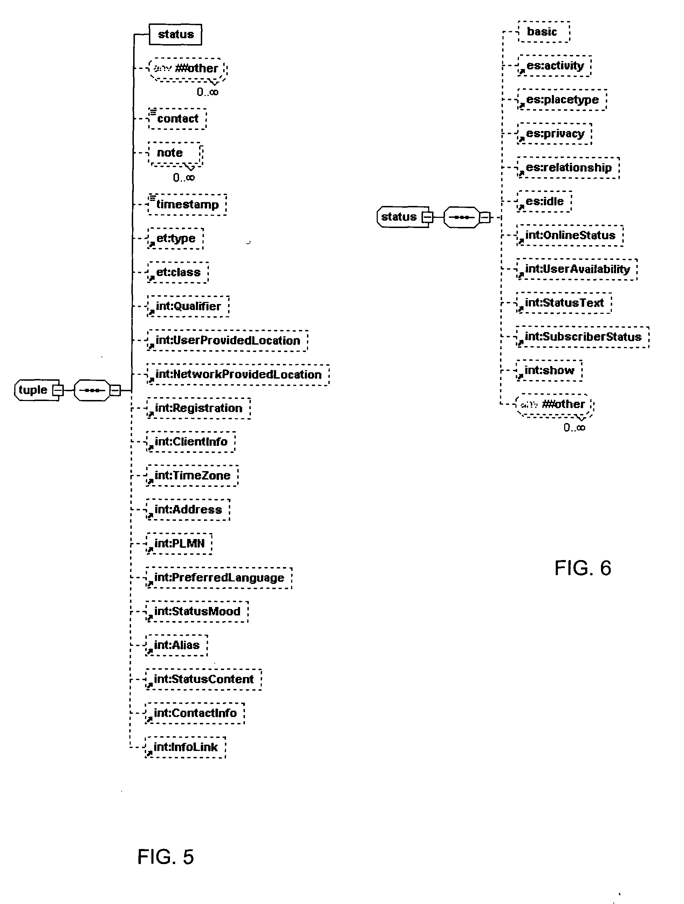

Any required mapping of a presentity presence document to the IPD is carried out by the OPIG on the basis of the IPD XML schema, which is enclosed as Annex II. Figs. 5 and 6 provide the graphical representation of the XML Schema of Annex II for IPD <tuple> and <status> elements. The information elements defined by RPIDF are identified by namespace *et:* (in the tuple diagram) or es: (in the status diagram), and those specific for the interoperability format are identified by *int:.* The elements defined by CPIM-PIDF (e.g. "contact" and "note" in the tuple diagram, "basic" in the status diagram) have no explicit namespace indication. It will be appreciated from Fig. 6 that the XML schema includes a number of RPIDF tags for attributes that at present have no correspondence in domains 2 - 5 in Fig. 1. Should any such attribute be defined in any of such domains, clearly it will be mapped according to rule 2.

At the other side, a TPIG will perform the inverse mapping of that carried out at the OPIG. Should the interoperability document contain attributes that are not defined in the local domain, the TPIG can discard them or it can adopt them when the presence service administrator decides that such attribute is of interest. In such case, the TPIG will extract any attribute as it is.

In accordance with the choice of SIMPLE as common protocol, the presence document translated into the interoperability format defined above will be transmitted over SIP network 6 within the SIP message demanded by the specific procedure within which the document has been generated. In particular, the document will be included in the message field following the SIP-protocol specific fields and identified by header "content-type", where the existence of a presence document will be indicated. That field of the SIP message - which is a text type message - will thus comprise a sequence of data strings, containing the different attributes to be transmitted and associated with either the CPIM/PIDF or the RPIDF or the interoperability tags, according to the above rules.

It is evident that the above description has been given by way of non-limiting example and that changes and modifications are possible without departing from the scope of the invention. Thus other local protocols and formats can be envisaged; further procedures can be implemented in the common protocol, the latter could be different from SIMPLE and the interoperability format could be an XML which is not based on CPIM/PIDF. On the other hand, any change or addition of a protocol and a format merely entails a change or addition in the conversion tables in the corresponding gateway.

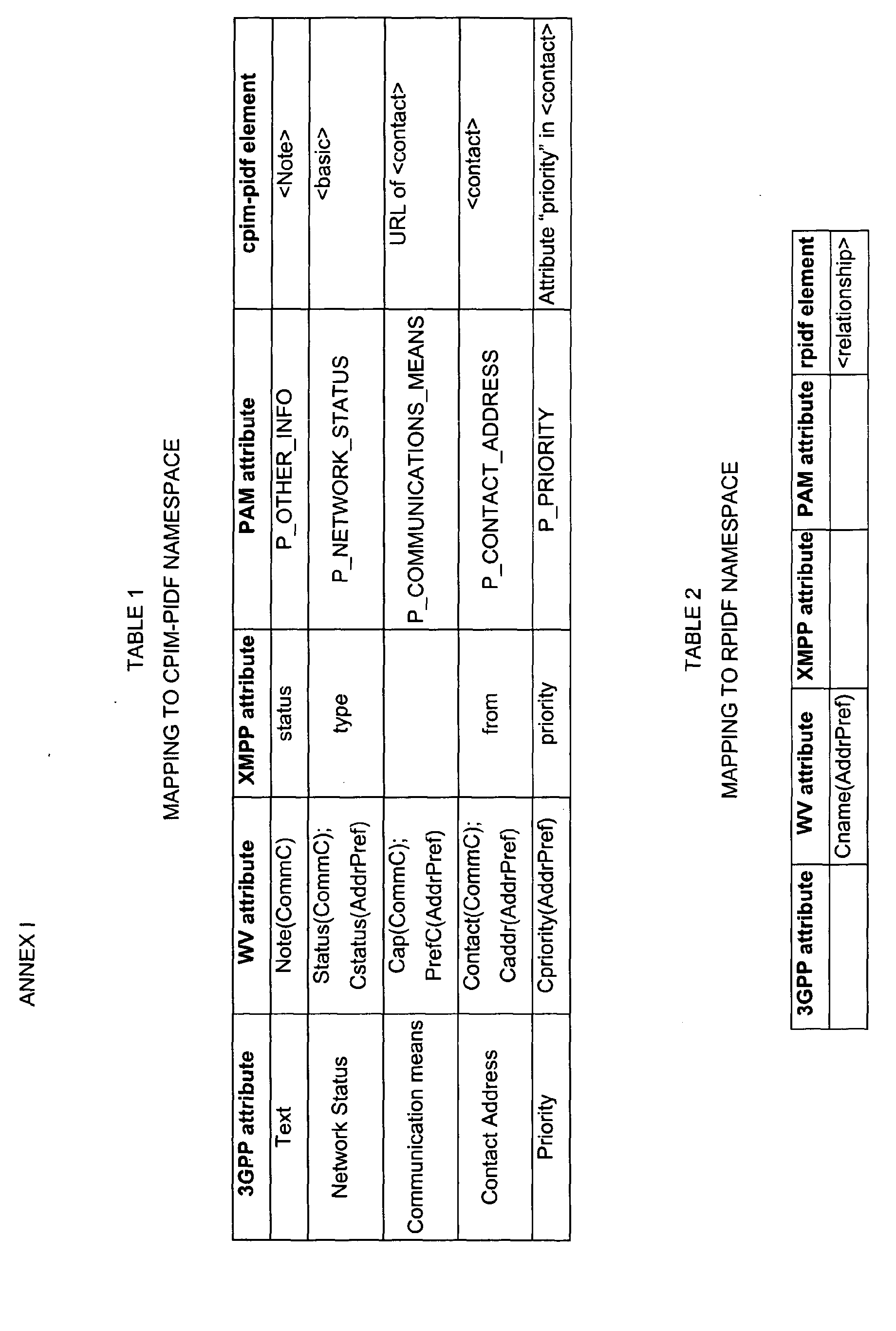

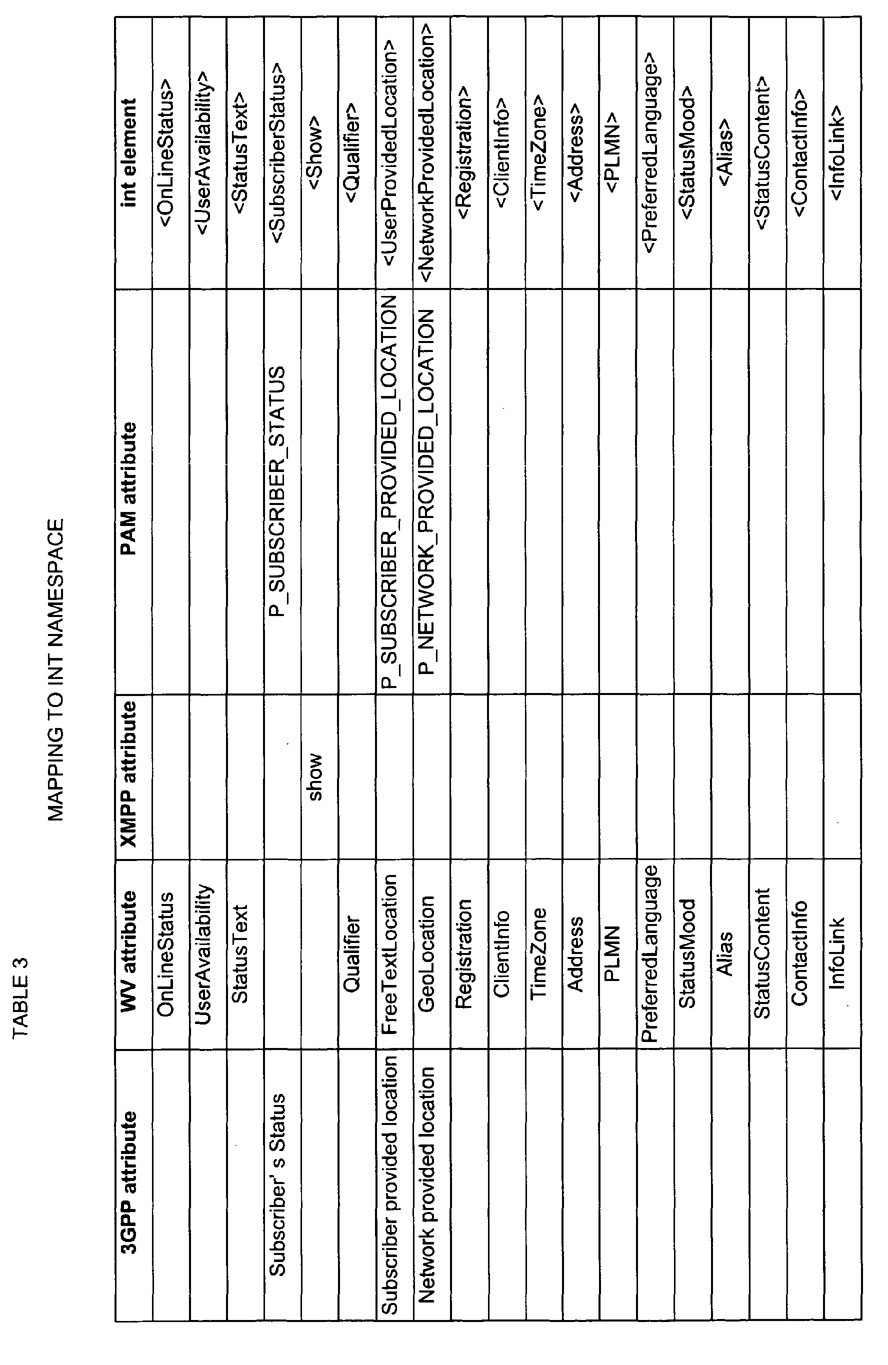

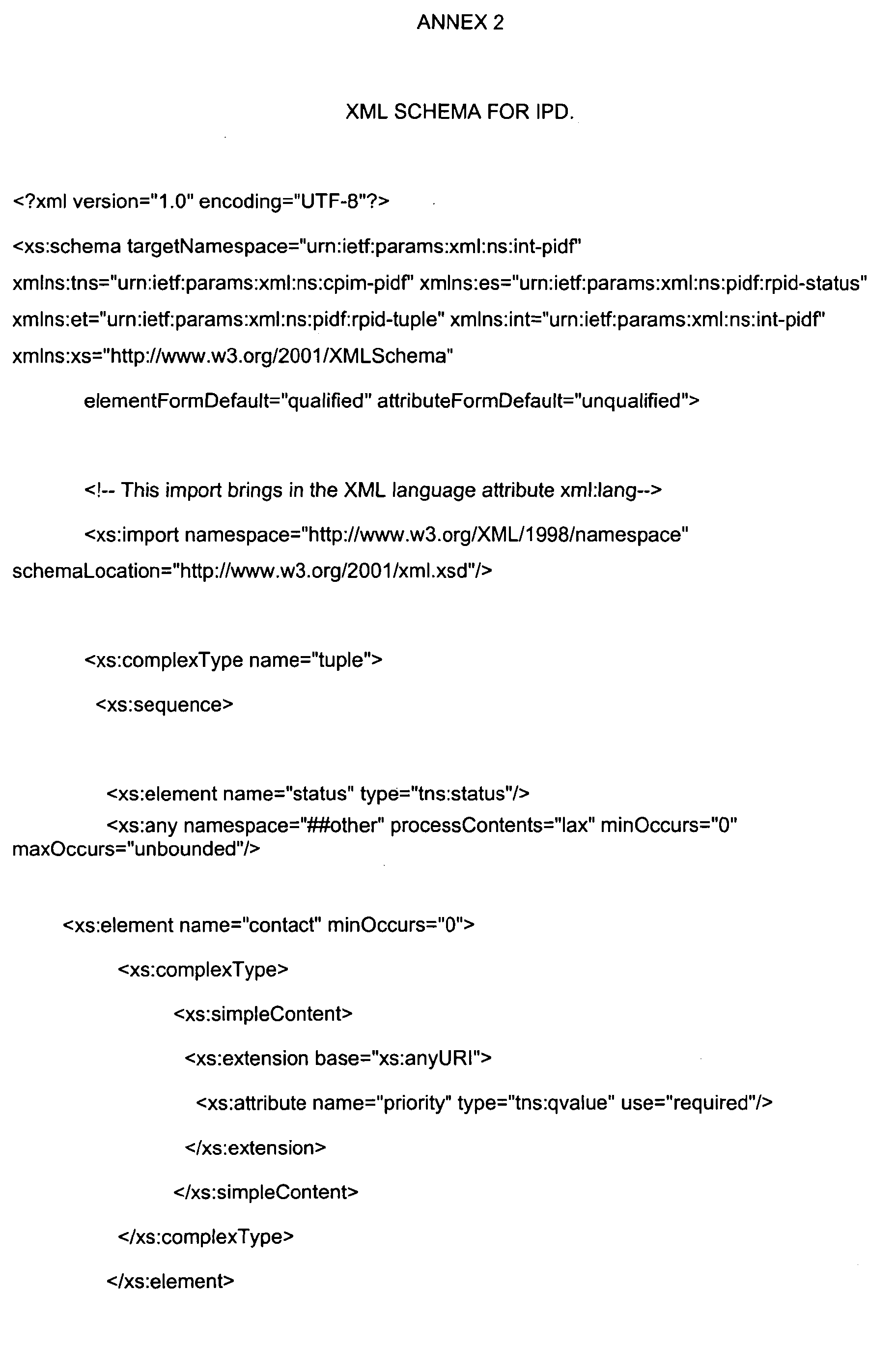

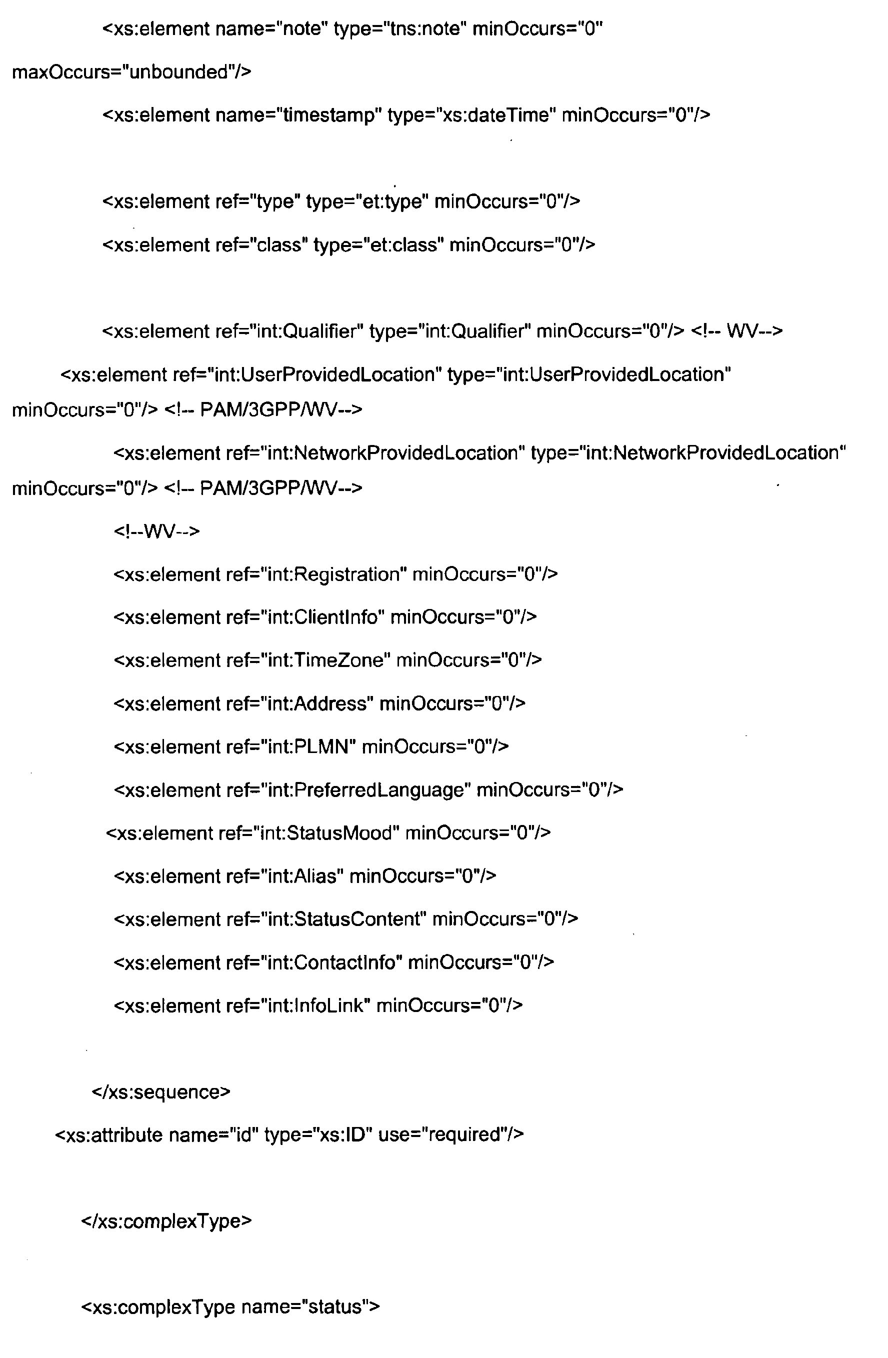

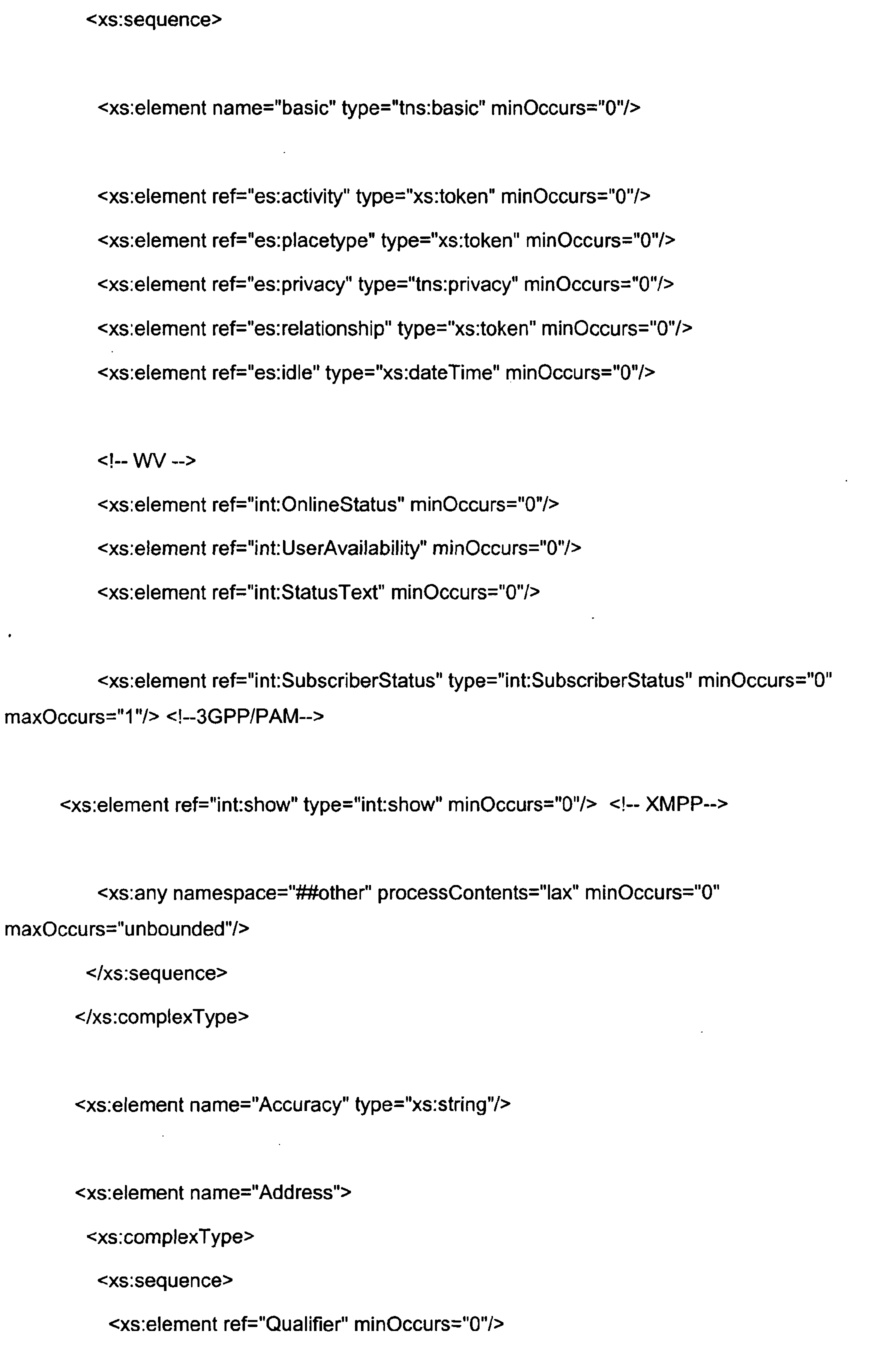

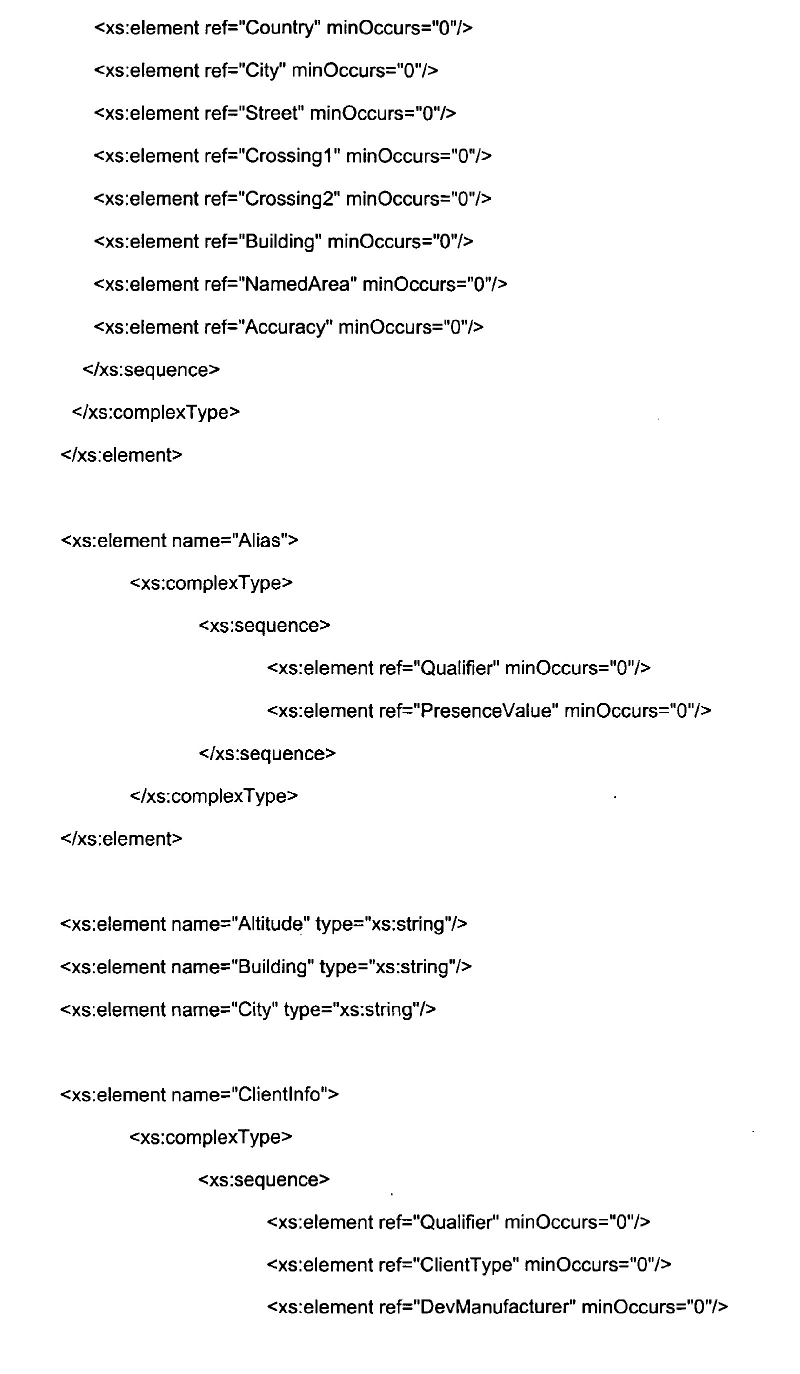

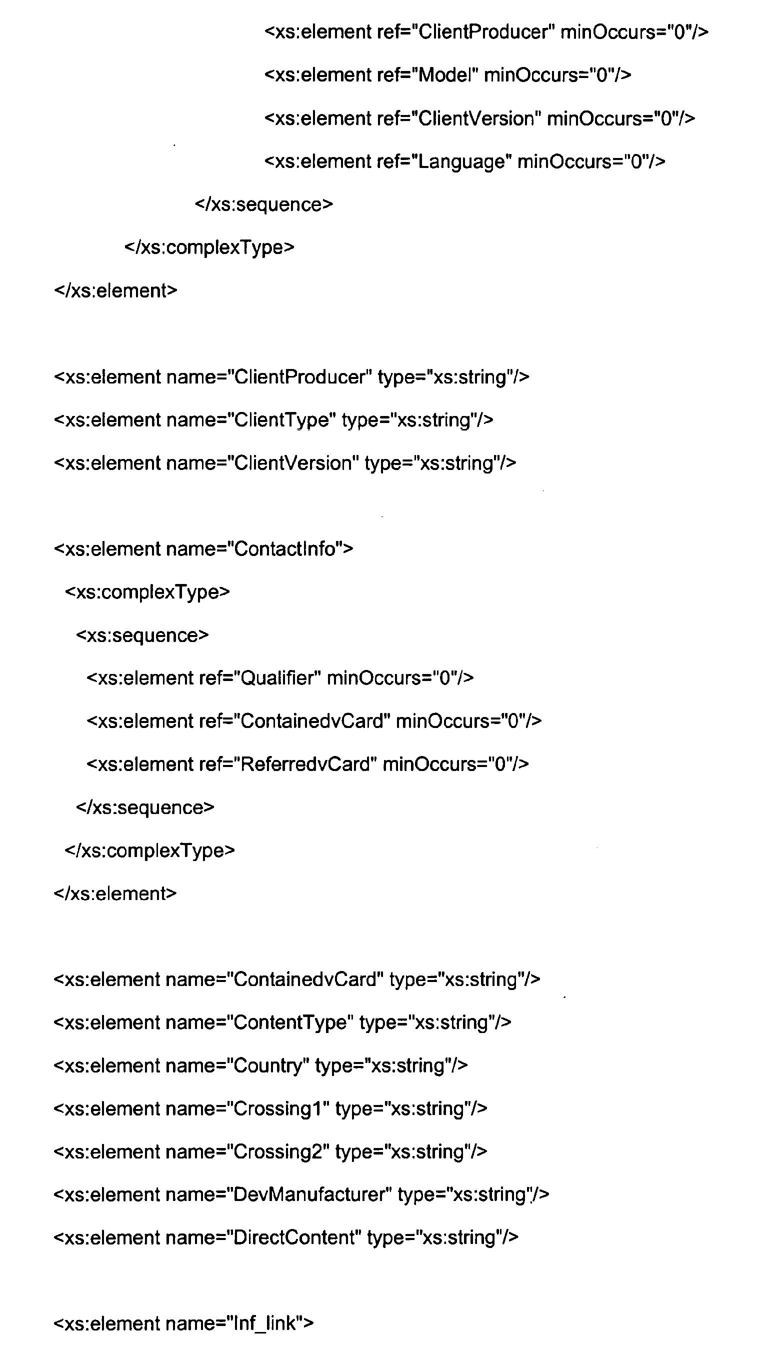

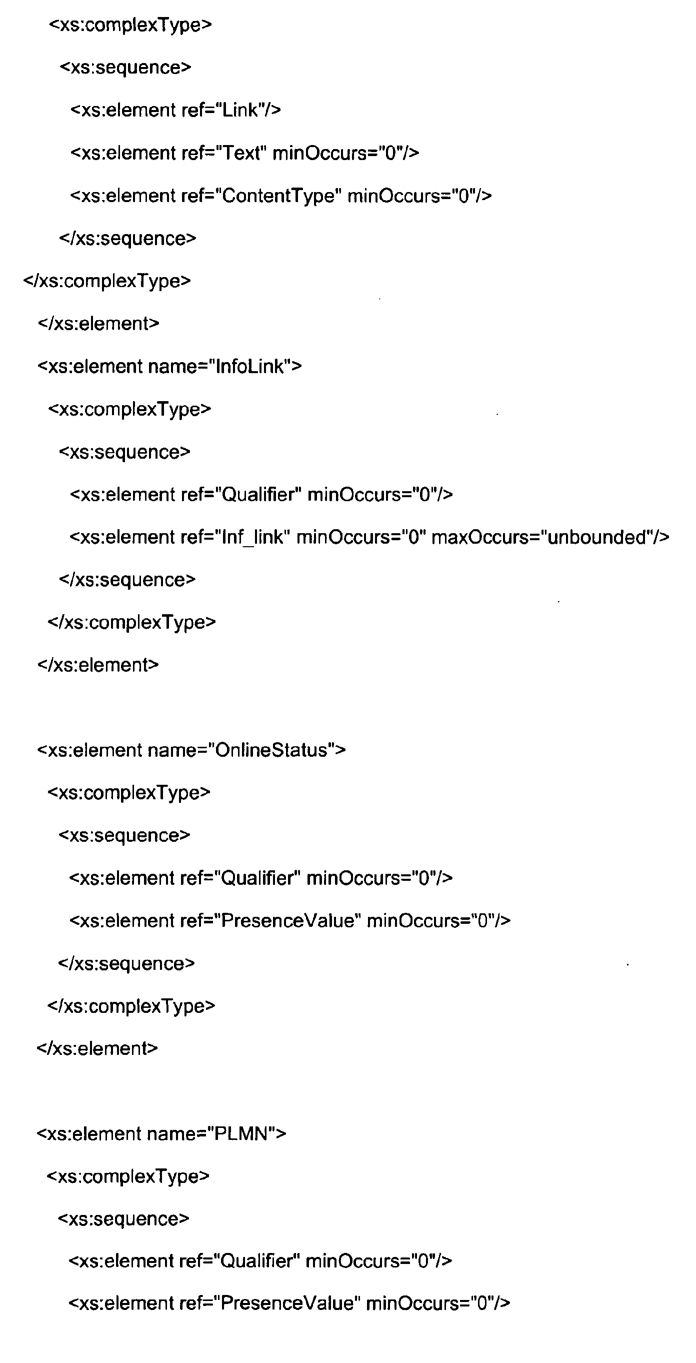

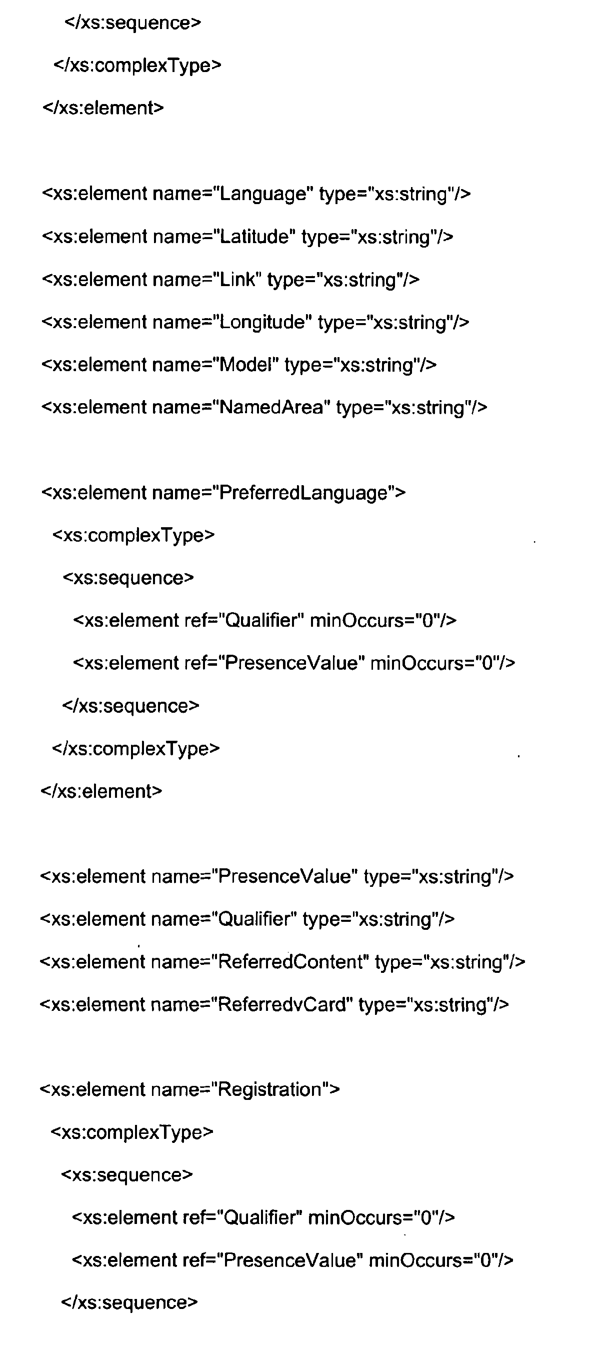

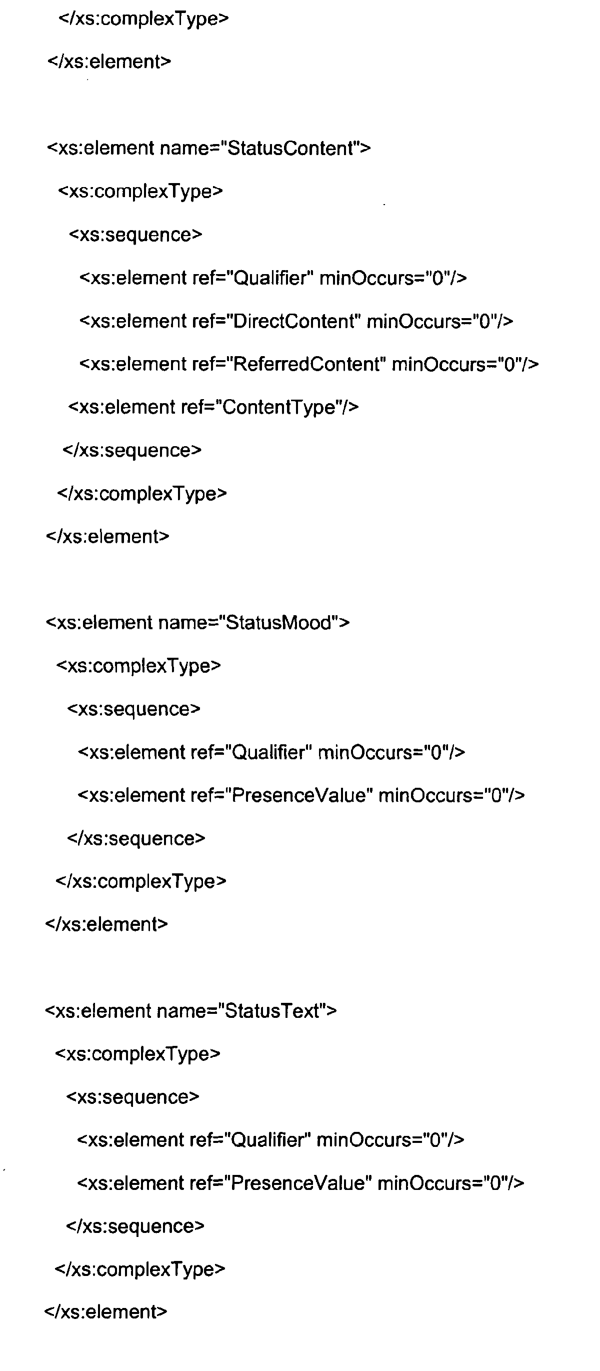

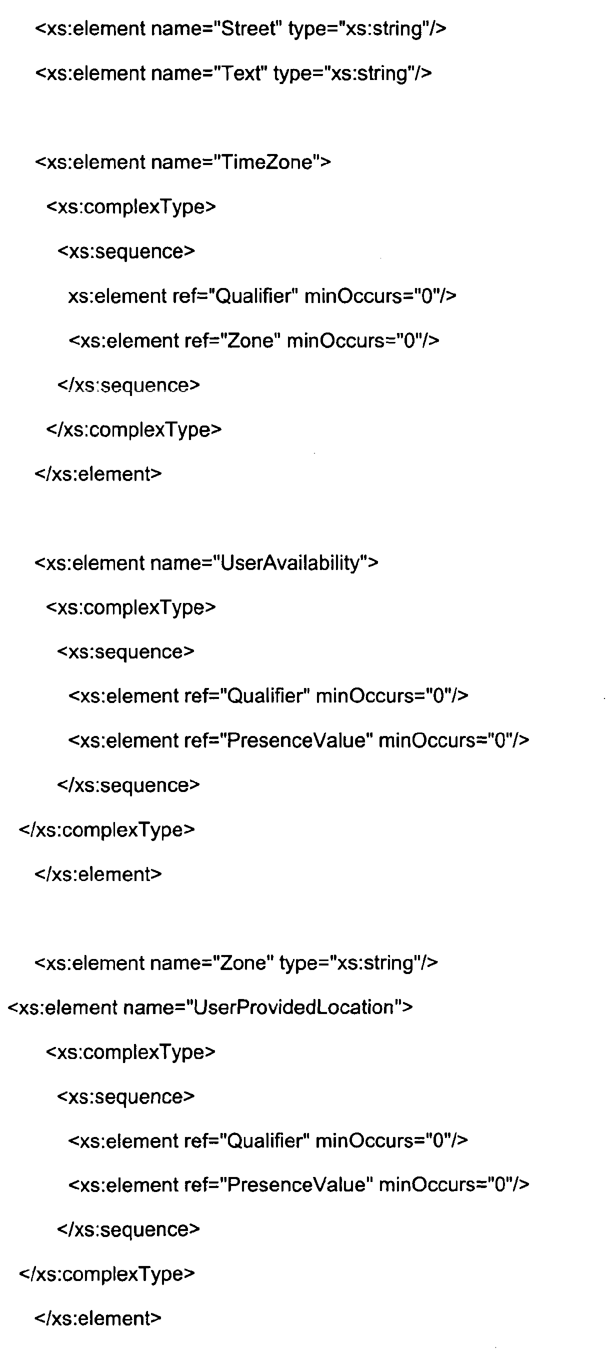

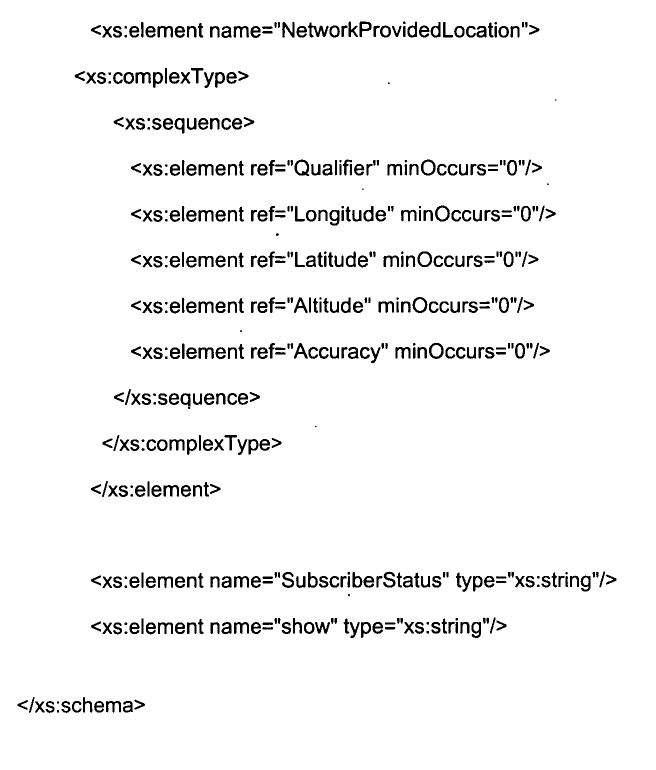

## Claims

1. A method of processing presence information in a communication system (1) including a plurality of subsystems (2, 3, 4, 5) each supporting a presence service operating according to a respective local presence protocol, wherein an interoperability protocol is used for the exchange of messages related with the presence service among the different subsystems (2, 3, 4, 5) and wherein said presence information is contained in a presence document that is drafted by an originating subsystem (2, 3, 4, 5) in a respective protocol-specific format and is included as a sequence of data strings in a message, the method being **characterised in that** it comprises the steps of:
- converting a presence document produced by an entity of said originating subsystem (2, 3, 4, 5) and intended to one or more entities in a destination subsystem (2, 3, 4, 5) from the format specific for the local protocol of the originating subsystem into an interoperability format supported by said interoperability protocol, thereby building an interoperability presence document;
- including said interoperability presence document into a predetermined information field of the proper message, which is organised according to said interoperability protocol and is forwarded over a signalling network (6) connecting the different subsystems and accommodating said interoperability protocol; and
- extracting an interoperability presence document to be passed to said one or more entities in the destination subsystem (2, 3, 4, 5) from said message field and converting the interoperability presence document into the format required by said destination subsystem (2, 3, 4, 5).

2. A method as claimed in claim 1, **characterised in that** said interoperability protocol is the SIMPLE ["SIP (Session Initiation Protocol) for Instant Messaging and Presence Leveraging Extensions"] protocol and the interoperability format is an XML (Extensible Markup Language) based format.

3. A method as claimed in claim 2, **characterised in that** said interoperability format is an extension of the CPIM/PIDF (Common Presence and Instant Messaging/Presence Information Data Format) and RPIDF (Rich PIDF) formats, whereby said interoperability presence document contains data strings identified by tags defined by the CPIM/PIDF format, data strings identified by tags defined by the RPIDF format and data strings identified by tags specific for the interoperability format.

4. A method as claimed in claim 3, **characterised in that** said data strings identified by tags specific for the interoperability format include data strings containing information items defined by the presence services of a plurality of subsystems (2, 3, 4, 5) and identified by a different tag in each subsystem, or data strings containing information items defined by the presence service of a single subsystem (2, 3, 4, 5).

5. A method as claimed in claim 4, **characterised in that** said data strings identified by tags specific for the interoperability format and containing information items defined by the presence service of a single subsystem (2, 3, 4, 5) are identified by a tag corresponding to that used in the presence service of said single subsystem (2, 3, 4, 5).

6. A method as claimed in any preceding claim, **characterised in that** the interoperability presence document is built by:
- associating data strings containing information items that can be mapped with the same meaning to CPIM/PIDF or RPIDF defined items with an existing CPIM/PIDF or RPDIF tag, respectively; and
- associating data strings containing information items that cannot be mapped with the same meaning to CPIM/PIDF or RPIDF defined items with tags specific for the interoperability format.

7. A method as claimed in claim 6, **characterised in that**, when building said interoperability presence document, the destination subsystem is identified and the conversion ignores data strings containing information items that are not understood by such destination subsystem.

8. A method as claimed in any of claims 1 to 6, **characterised in that** for conversion from the interoperability protocol into the local protocol, data strings containing information items that are common to both formats are converted to the local protocol, whereas the others are passed to the local protocol as they are in the interoperability presence document, if the local service administrator wishes to include such items into the set of information items defined by the local service, otherwise are discarded.

9. A method as claimed in any preceding claim, **characterised in that** one or more of said subsystems (2, 3, 4, 5) are mobile communication networks.

10. A communication system (1) made up of a plurality of subsystems (2, 3, 4, 5) each including means (21, 31, 41, 51) for managing a presence-based service operating according to a respective local presence protocol, a number of messages defined by said local protocols including presence documents containing presence information that is drafted in a respective protocol-specific format, wherein the managing means (21-26, 31, 41, 51) in each said subsystem (2, 3, 4, 5) are associated to conversion means (22a, 22b; 32, 42, 52) for converting messages generated in the subsystem (2, 3, 4, 5) from the local protocol into an interoperability protocol and for converting messages intended for that subsystem (2, 3, 4, 5) from said interoperability protocol into the local protocol, **characterised in that** said conversion means (22a, 22b; 32, 42, 52) are further arranged to convert a presence document produced by said originating entity from the format specific for the local protocol of the originating subsystem (2, 3, 4, 5) into a presence document drafted in an interoperability format supported by said interoperability protocol, thereby building an interoperability presence document; to include said interoperability presence document into a predetermined information field of a message organised according to said interoperability protocol, to be forwarded over a signalling network (6) connecting the protocol conversion means (22a, 22b; 32, 42, 52) in the different subsystems (2, 3, 4, 5) and supporting said interoperability protocol; and to extract an interoperability presence document to be passed to said destination entity from said message field and to convert said document into the format required by the local protocol of said destination subsystem (2, 3, 4, 5).

11. A system as claimed in claim 10, **characterised in that** said conversion means (22a, 22b; 32, 42, 52) are arranged to translate the messages from a local protocol to the SIMPLE protocol, and to translate the presence documents from the local format to an XML-based format that is an extension of the CPIM/PIDF and RPIDF formats, and vice versa.

12. A method as claimed in claim 10 or 11, **characterised in that** said conversion means (22a, 22b; 32, 42, 52) are arranged to insert/extract said presence document drafted in the interoperability format into/from an information field that, in the respective SIMPLE message, is preceded by a "content-type" header.

13. A system as claimed in claim 11 or 12, **characterised in that** said conversion means (22a, 22b; 32, 42, 52) are arranged to associate data strings in the interoperability presence document either with tags defined by the CPIM/PIDF or the RPIDF formats or with tags specific for the interoperability format.

14. A system as claimed in claim 13, **characterised in that** said conversion means (22a, 22b; 32, 42, 52) are arranged to associate tags specific for the interoperability format with either data strings containing information items defined by the presence services of a plurality of subsystems (2, 3, 4, 5) and identified by a different tag in each subsystem, or with data strings containing information items defined by the presence service of a single subsystem (2, 3, 4, 5).

15. A method as claimed in claim 14, **characterised in that** said conversion means (22a, 22b; 32, 42, 52) are arranged to associate said data strings containing information items defined by the presence service of a single subsystem (2, 3, 4, 5) with the same tag as used in the presence service of said single subsystem.

16. A method as claimed claim 10 to 15, **characterised in that**, for building said interoperability presence document, said conversion means (22a, 22b; 32, 42, 52) are arranged to:
- associate data strings containing presence information items that can be mapped with the same meaning to CPIM/PIDF or RPIDF defined items with an existing CPIM/PIDF or RPDIF tag, respectively; and
- associating data strings containing presence information items that cannot be mapped with the same meaning to CPIM/PIDF or RPIDF defined items with tags specific for the interoperability format.

17. A communication system as claimed in any of claims 10 to 16, **characterised in that**, when building the interoperability presence document, said conversion means (22a, 22b; 32, 42, 52) are arranged to identify the destination subsystem and to convert only data strings containing information items that are recognised by the destination subsystem.

18. A communication system as claimed in any of claims 10 to 16, **characterised in that**, for conversion from the interoperability format into the local format, said conversion means (22a, 22b; 32, 42, 52) are arranged to convert information items that are common to both formats to the local format, and to pass the other information items to the local service management means (21, 31, 41, 51) as they are, if the local service administrator wishes to supplement therewith its local set of information items, and otherwise to discard such items.

19. A communication system as claimed in any of claims 10 to 18, **characterised in that** one or more of said subsystems (2, 3, 4, 5) are mobile communication networks.
